# EUROPÄISCHE PATENTSCHRIFT

(11) **EP 4 430 336 B1**
(45) Veröffentlichungstag und Bekanntmachung des Hinweises auf die Patenterteilung: **25.06.2025**
(21) Anmeldenummer: 22808962.9
(22) Anmeldetag: 04.11.2022
(51) Int. Cl.: F17C 3/04, F17C 3/08

(54) **SPEICHER- UND/ODER TRANSPORTBEHÄLTER FÜR EIN KRYOGEN VERFLÜSSIGTES GAS UND VERFAHREN ZUR SPEICHERUNG UND/ODER ZUM TRANSPORT EINES KRYOGEN VERFLÜSSIGTEN GASES**
STORAGE AND / OR TRANSPORT CONTAINER FOR A CRYOGENIC LIQUEFIED GAS AND METHOD FOR STORAGE AND / OR TRANSPORT OF A CRYOGENIC LIQUEFIED GAS
RÉCIPIENTS DE STOCKAGE ET/OU DE TRANSPORT POUR UN GAZ CRYOGÈNE LIQUÉFIÉ ET PROCÉDÉ DE STOCKAGE ET/OU DE TRANSPORT D'UN GAZ CRYOGÈNE LIQUÉFIÉ

(30) Priorität: 08.11.2021 EP 21020553
(43) Veröffentlichungstag der Anmeldung: 18.09.2024
(73) Patentinhaber: Linde GmbH, 82049 Pullach (DE)
(72) Erfinder: AIGNER, Herbert, 82049 Pullach (DE)
(74) Vertreter: Meilinger, Claudia Sabine
(86) Internationale Anmeldenummer: PCT/EP2022/025496
(87) Internationale Veröffentlichungsnummer: WO 2023/078586

(56) Entgegenhaltungen:
- EP-B1- 0 090 334
- WO-A2-2007/026332
- CN-B- 105 443 974
- DE-A1- 102010 020 944
- DE-A1- 102018 000 164
- DE-C2- 3 103 646
- US-A- 2 332 462

## Beschreibung

Die Erfindung betrifft einen Speicher- und/oder Transportbehälter für ein kryogen verflüssigtes Gas und ein Verfahren zur Speicherung und/oder zum Transport eines kryogen verflüssigten Gases.

### Hintergrund

Ortsbewegliche Speicherbehälter für kryogen verflüssigte Gase wie Flüssighelium und Flüssigwasserstoff (insbesondere die sogenannten Helics- und Hylics-Container der Anmelderin), beispielsweise im Standard-Container- bzw. UN-Format (40 Fuß oder 20 Fuß, d.h. 12,192 Meter oder 6,096 Meter) sind bekannt. Derartige Speicherbehälter können mit einer vakuuum- oder stickstoffisolierten Doppelwand ausgebildet sein und weisen in diesem Fall einen Innen- und einen Außenbehälter auf. Der Außenbehälter ist in einem Containerrahmen geeigneter Bemaßung aufgenommen, der insbesondere ein Stapeln und Handhaben des Speicherbehälters, z.B. mit Gabelstaplern oder Portalkrans, ermöglicht.

Die Außenbehälter entsprechender Speicherbehälter können aus Edelstahl mit einer Aussenverrippung als erforderlicher Versteifung gegen beispielsweise das Vakuum in der Doppelwand und dynamische Belastungen beim Transport ausgebildet sein.

Die vorliegende Erfindung stellt sich die Aufgabe, die Eigenschaften entsprechender, insbesondere, aber nicht notwendigerweiser, ortsbeweglicher Speicherbehälter (hier auch als "Speicher- und/oder Transportbehälter" bezeichnet) und deren Herstellung, sowie entsprechende Speicher- und Transportverfahren zu verbessern.

EP 0 090 334 B1 offenbart eine Glasfaserisolierung für ein Tiefsttemperatur - Transportgefäss.

### Offenbarung der Erfindung

Vor diesem Hintergrund werden ein Speicher- und/oder Transportbehälter für ein kryogen verflüssigtes Gas und ein Verfahren zur Speicherung eines kryogen verflüssigten Gases mit den jeweiligen Merkmalen der unabhängigen Patentansprüche vorgeschlagen. Ausgestaltungen der vorliegenden Erfindung sind jeweils Gegenstand der abhängigen Patentansprüche sowie der nachfolgenden Beschreibung. Erfindungsgemäß wird ein Speicher- und/oder Transportbehälter für ein kryogen verflüssigtes Gas vorgeschlagen, der eine Doppelwand aufweist, die durch einen Außenbehälter und einen Innenbehälter gebildet wird, wobei der Außenbehälter den Innenbehälter umgibt, und wobei der Außenbehälter einen zylindermantelförmigen metallischen Wandbereich aufweist, der an einander entgegengesetzten Enden, d.h. an einem ersten und einem zweiten Ende des zylindermantelförmigen metallischen Wandbereichs, in gewölbte metallische Wandbereiche übergeht.

Die gewölbten metallischen Wandbereiche können beispielsweise in Form von Kugel- oder Ellipsoidkalotten ausgebildet sein, die auch beispielsweise apikal abgeflacht oder anderweitig verformt sein können. Die gewölbten metallischen Wandbereiche können beispielsweise einstückig bzw. monolithisch mit dem zylindermantelförmigen metallischen Wandbereich ausgebildet oder mit diesem verschweißt oder in anderer Weise verbunden sein.

Erfindungsgemäß ist vorgesehen, dass eine Wandstärke des zylindermantelförmigen metallischen Wandbereichs sich ausgehend von einem zentralen Abschnitt, der mittig zwischen dem ersten und zweiten Ende liegt, in Richtung des ersten und zweiten Endes erhöht (bzw. in umgekehrter Richtung verjüngt). Zumindest in dem zentralen Abschnitt ist also die Wandstärke des zylindermantelförmigen Wandbereichs geringer als an den Enden, die in die gewölbten metallischen Wandbereiche übergehen. Zumindest in dem zentralen Abschnitt des zylindermantelförmigen metallischen Wandbereichs ist dabei auf den zylindermantelförmigen metallischen Wandbereich eine Verstärkungslage aufgebracht, die einen faserverstärkten Kunststoff aufweist. Speicher- und/oder Transportbehälter für kryogen verflüssigte Gase wie Flüssighelium und Flüssigwasserstoff müssen, insbesondere dann, wenn sie mit einer vakuum- oder stickstoffisolierten Doppelwand ausgebildet sind und daher einen Innen- und einen Außenbehälter aufweisen, wie bereits eingangs erwähnt mit einer Versteifung ausgebildet sein. Die Versteifung des Behälters ist erforderlich aufgrund des Vakuums im Isolierraum und einem typischerweise rahmenlosen Aufbau zwischen den Aufnahmerahmen an den Containerenden (falls ein Behälter entsprechend ausgebildet ist). Alle Lasten aus Straßen-, Bahn- und Schiffstransport und Heben des Speicherbehälters müssen hierbei durch den Behältermantel aufgenommen werden.

Die Versteifung ist herkömmlicherweise durch außenliegende Versteifungsringe gebildet. Diese führen in entsprechenden herkömmlichen Ausgestaltungen typischerweise zu einer Verschlechterung der Aerodynamik und somit zu einem erhöhten Treibstoffverbrauch beim Straßentransport, beispielsweise auf entsprechenden Aufliegern, auf denen diese unverdeckt transportiert werden. Die vorliegende Erfindung ermöglicht einen Verzicht auf entsprechende Versteifungsringe aufgrund der vorteilhaften Verstärkung durch den faserverstärkten Kunststoff in dem zentralen Abschnitt des zylindermantelförmigen metallischen Wandbereichs und damit eine entsprechende Verbesserung der Aerodynamik bei gleichzeitiger Gewichtsreduzierung. Auf diese Weise erlauben Ausgestaltungen der vorliegenden Erfindung einen kostengünstigeren Transport.

Eine grundsätzlich mögliche Verlagerung der Versteifungsringe (beispielsweise nach innen) würde zu einer Verkleinerung des Innenbehälters führen und somit das nutzbare Volumen ("Payload") des Containers verringern, die insbesondere bei Flüssigwasserstoffbehältern ohnehin schon vergleichsweise niedrig ist. Der Einsatz des faserverstärkten Kunststoffs gemäß Ausgestaltungen der vorliegenden Erfindung ermöglicht den Erhalt des gesamten Volumens.

Eine grundsätzlich mögliche Wandstärkenvergrößerung am Außenbehälter würde das Behältergewicht sowie die Kosten aufgrund des hierfür erforderlichen zusätzlichen Metallbedarfs (typischerweise Edelstahl) signifikant erhöhen. Die vorliegende Erfindung ermöglicht dagegen eine Versteifung mittels kostengünstiger Materialien. Die vorliegende Erfindung erlaubt ferner, flexibel auf die Steifigkeit des Speicherbehälters, beispielsweise durch Erhöhung der Dicke bzw. Lagenzahl des faserverstärkten Kunststoffs, Einfluss zu nehmen und diese wie gewünscht einzustellen.

Der im Rahmen von Ausgestaltungen der vorliegenden Erfindung verwendete faserverstärkte Kunststoff weist insbesondere eine Matrix in Form einer Kunstharz-, Duroplast- oder Thermoplastmatrix auf. Je nach Einsatzgebiet und Anforderungen können dabei unterschiedliche Matrices verwendet werden, insbesondere Epoxidharzmatrices, wie grundsätzlich aus dem Bereich der Komposittechnik bekannt.

In einer Ausgestaltung der vorliegenden Erfindung sind in die Matrix Verstärkungsfasern eingebettet, die aus Basaltfasern, Borfasern, Glasfasern, Keramikfasern, Kieselsäurefasern, Kohlenstofffasern, Quarzfasern, Metallfasern, Aramidfasern, Poly(p-phenylen-2,6-benzobisoxazol)-Fasern, Polyesterfasern, Nylonfasern, Polyethylenfasern, Polymethylmethacrylatfasern und beliebigen Kombinationen der genannten Fasern ausgewählt sind.

Eine Ausgestaltung der Erfindung umfasst die Verwendung kohlenstofffaserverstärkter bzw. carbonfaserverstärkter Kunststoffe (CFK), also eines Verbundwerkstoffs, bei dem Kohlenstofffasern in eine Kunststoffmatrix eingebettet sind. Die Matrix dient dabei, wie grundsätzlich bekannt, zur Verbindung der Fasern sowie zum Füllen der Zwischenräume. Als Matrix kann der Werkstoff Epoxidharz gewählt werden. Es sind aber auch andere Duroplaste oder auch Thermoplaste als Matrixwerkstoff verwendbar. Kohlenstofffaserverstärkte Kunststoffe haben den besonderen Vorteil einer geringen Masse und gleichzeitig hoher Steifigkeit.

In einer Ausgestaltung der vorliegenden Erfindung ist vorgesehen, dass eine Zugfestigkeit der Verstärkungslage und/oder des faserverstärkten Kunststoffs darin 500 bis 1000 Newton pro Quadratmillimeter beträgt und/oder dass eine Dichte hiervon 1 bis 5 Kilogramm pro Kubikdezimeter beträgt. Ein entsprechend ausgestalteter Speicher- und/oder Transportbehälter lässt sich hierduch mit besonders vorteilhaften mechanischen Eigenschaften ausbilden.

In einer Ausgestaltung der vorliegenden Erfindung ist vorgesehen, dass die Verstärkungslage zumindest teilweise auf den zylindermantelförmigen metallischen Wandbereich auflaminiert ist. Durch eine entsprechende Auflaminierung lassen sich die mechanischen Eigenschaften weiter verbessern. Der metallische zylinderförmige Abschnitt und die Verstärkungslage lassen sich nur gemeinsam verformen.

In einer Ausgestaltung der vorliegenden Erfindung ist vorgesehen, dass ein Umfang des zylindermantelförmigen metallischen Wandbereichs in dem zentralen Abschnitt geringer als an den Enden des zylindermantelförmigen metallischen Wandbereichs ist. Eine Ausgestaltung der vorliegenden Erfindung sieht vor, dass der zylindermantelförmige metallische Wandbereich in zumindest einem Teil des zentralen Abschnitts mit einer Dicke von weniger als 8, 7, 6, 5 oder 4 Millimetern ausgebildet ist. Wie auch in der nachfolgenden Tabelle erläutert, kann durch die besseren mechanischen Eigenschaften insbesondere von kohlenstofffaserverstärkten Kunststoffen eine entsprechend dünnere Behälterwand verwendet werden. In der Tabelle sind dabei in den Tabellenspalten die entsprechenden Eigenschaften von Edelstahl 1.4301, eines Kompositmaterials wie kohlenstofffaserverstärktem Kunststoff und ein entsprechender Faktor aufgeführt. Die Zugfestigkeit ist in Form der plastischen 0,2-%-Dehngrenze angegeben.

**Tabelle 1**

| | Edelstahl | Komposit | Faktor |
|---|---|---|---|
| Dichte | 7,8 kg/dm³ | 1,5 kg/dm³ | 0,19 |
| Zugfestigkeit | 210 N/mm² | 800 N/mm² | 3,80 |
| Min. Wandstärke | 10 mm | 2,7 mm (rechn.) | -73% |
| Materialeinsatz | 11.000 kg | 550 kg | -95% |

In einer Ausgestaltung der vorliegenden Erfindung ist vorgesehen, dass die gewölbten metallischen Wandbereiche jeweils mit Containerrahmen verbunden sind, die Containerrahmen aber insbesondere nicht über weitere Verbindungsstrukturen außer dem Behälter selbst miteinander verbunden sind. Der Speicher- und/oder Transportbehälter ist also in einer entsprechenden Ausgestaltung der Erfindung in die vorhandene Container-Infrastruktur einbindbar. Insbesondere bei einem Straßentransport ergeben sich dabei die Vorteile der vorliegenden Erfindung. In einer Ausgestaltung der vorliegenden Erfindung ist dabei vorgesehen, dass der Speicher- und/oder Transportbehälter in einem Standard-Containerformat mit einer Länge von 40 Fuß (12,192 Meter), ggf. jedoch auch 20 Fuß (6,096 Meter), ausgebildet ist.

Wie bereits erwähnt, ist insbesondere vorgesehen, dass die gewölbten metallischen Wandbereiche in Form unmodifizierter oder modifizierter Kugel- oder Ellipsoidkalotten bereitgestellt sind. Die gewölbten metallischen Wandbereiche können dabei insbesondere einstückig mit dem zylindermantelförmigen metallischen Wandbereich ausgebildet oder mit diesem stoffschlüssig verbunden sein, wie ebenfalls bereits erwähnt. Die Doppelwand kann insbesondere zur Evakuierung oder Befüllung mit einem Isolier- oder Kühlfluid eingerichtet oder mit einem Isoliermaterial befüllt sein. Insbesondere bei einer Vakuumisolation ergibt sich das Erfordernis einer Verstärkung, das die vorliegende Erfindung vorteilhaft erfüllen kann.

In einer Ausgestaltung der vorliegenden Erfindung ist der Speicher- und/oder Transportbehälter zur Speicherung und/oder zum Transport von Flüssigwasserstoff oder Flüssighelium als dem kryogen verflüssigten Gas ausgebildet. Der Speicher- und/oder Transportbehälter kann dabei insbesondere zur Speicherung und/oder zum Transport von 20 bis 41 Kubikmetern des kryogen verflüssigten Gases eingerichtet sein. Es handelt sich damit um einen Großcontainer, wie er beispielsweise, wie zuvor erwähnt, in einem Containerrahmen aufgenommen und beispielsweise auf einem Auflieger transportiert werden kann. Insbesondere bei derartigen Großcontainern sind die in Ausgestaltungen der Erfindung erzielbaren Vorteile wie bessere Windwiderstandswerte und geringeres Gewicht zur Senkung der Transportkosten von besonderer Relevanz.

Ein Verfahren zur Speicherung und/oder zum Transport eines kryogen verflüssigten Gases, bei dem ein Speicher- und/oder Transportbehälter, wie er zuvor in vorteilhaften Ausgestaltungen der Erfindung beschrieben wurde, verwendet wird, ist ebenfalls Gegenstand der vorliegenden Erfindung. Dieses Verfahren profitiert von den zuvor bezüglich des erfindungsgemäßen Speicher- und/oder Transportbehälters und seiner Ausgestaltungen beschriebenen Vorteilen, auf die daher an dieser Stelle ausdrücklich verwiesen werden kann.

Die vorliegende Erfindung wird nachfolgend unter Bezugnahme auf die beigefügte Zeichnung weiter erläutert, die eine Ausgestaltung der vorliegenden Erfindung veranschaulicht.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, solange diese Ausführungsformen nicht vom Umfang der Ansprüche abweichen.

### Kurze Beschreibung der Zeichnungen

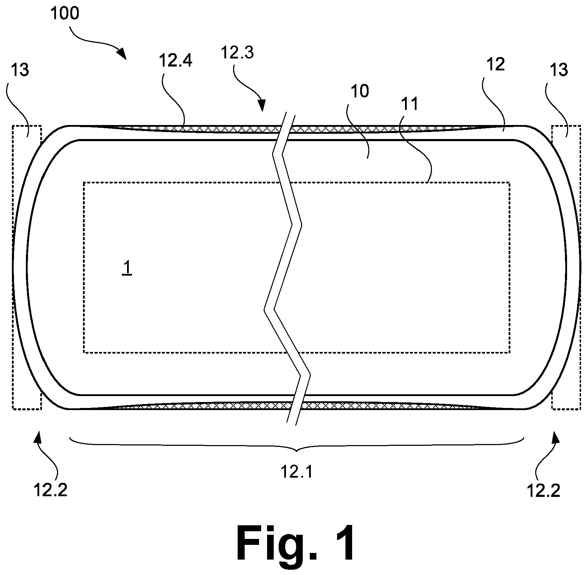

Figur 1 veranschaulicht einen Speicher- und/oder Transportbehälter gemäß einer Ausgestaltung der Erfindung.

### Ausführliche Beschreibung der Zeichnungen

In Figur 1 ist ein Speicher- und/oder Transportbehälter gemäß einer Ausgestaltung der Erfindung veranschaulicht und insgesamt mit 100 bezeichnet.

Der Speicher- und/oder Transportbehälter 100 ist hier stark vereinfacht und schematisiert dargestellt, wobei insbesondere eine Wanddicke stark übertrieben dargestellt ist, um Ausgestaltungen der Erfindung zu veranschaulichen.

Der Speicher- und/oder Transportbehälter 100 ist zur Speicherung und/oder zum Transport eines kryogen verflüssigten Gases vorgesehen, das hier mit 1 angegeben ist. Der Speicher- und/oder Transportbehälter 100 weist eine Doppelwand 10 auf, die beispielsweise vakuumisoliert sein kann. Die Doppelwand 10 ist durch einen Außenbehälter 12 und einen Innenbehälter 11 gebildet, wobei der Innenbehälter nochmals stärker vereinfacht veranschaulicht ist.

Der Außenbehälter 12 umgibt den Innenbehälter 11 und der Außenbehälter 12 weist einen zylindermantelförmigen metallischen Wandbereich auf, der hier mit 12.1 angegeben ist und an einander entgegengesetzten Enden, d.h. an einem ersten und einem zweiten Ende, in gewölbte metallische Wandbereiche 12.2 übergeht.

Eine Wandstärke des zylindermantelförmigen metallischen Wandbereichs 12.1 erhöht sich ausgehend von einem zentralen Abschnitt 12.3, der mittig zwischen dem ersten und zweiten Ende liegt, in Richtung des ersten und zweiten Endes, wobei in dem hier veranschaulichten Beispiel eine graduelle Erhöhung veranschaulicht ist, die Wandstärkenerhöhung jedoch auch stufenweise (in einer oder in mehreren Stufen) erfolgen kann. Die Erfindung ist hierdurch nicht beschränkt.

In dem zentralen Abschnitt 12.3 ist auf dem zylindermantelförmigen metallischen Wandbereich 12.1 eine Verstärkungslage 12.4 befestigt, die einen faserverstärkten Kunststoff aufweist. Wie hier veranschaulicht, ist hier eine der Wandstärkenänderung entsprechende Dickenänderung der Verstärkungslage möglich, aber auch andere Ausgestaltungen können im Rahmen der vorliegenden Erfindung vorgesehen sein.

Die Verstärkungslage 12.4 kann insbesondere zumindest teilweise auf den zylindermantelförmigen metallischen Wandbereich 12.1 auflaminiert sein, wie bereits erwähnt. Ferner kann, wenngleich hier nicht explizit veranschaulicht, ein Umfang des zylindermantelförmigen metallischen Wandbereichs 12.1 in dem zentralen Abschnitt 12.3 geringer als an den Enden des zylindermantelförmigen metallischen Wandbereichs 12.1 ausgebildet sein. Die gewölbten metallischen Wandbereiche 12.2 sind in dem hier veranschaulichten Beispiel jeweils mit Containerrahmen 13 verbunden, so dass ein entsprechender Speicher- und/oder Transportbehälter 100, der insbesondere auf diese Weise in einem Standard-Containerformat mit einer Länge von 20 oder 40 Fuß ausgebildet sein kann, entsprechend transportierbar ist.

## Patentansprüche

1. Speicher- und/oder Transportbehälter (100) für ein kryogen verflüssigtes Gas (1), der eine Doppelwand (10) aufweist, die durch einen Außenbehälter (12) und einen Innenbehälter (11) gebildet wird, wobei der Außenbehälter (12) den Innenbehälter umgibt, und wobei der Außenbehälter (12) einen zylindermantelförmigen metallischen Wandbereich (12.1) aufweist, der an einander entgegengesetzten Enden in gewölbte metallische Wandbereiche (12.2) übergeht, **dadurch gekennzeichnet, dass** eine Wandstärke des zylindermantelförmigen metallischen Wandbereichs (12.1) sich ausgehend von einem zentralen Abschnitt (12.3), der mittig zwischen dem ersten und zweiten Ende liegt, in Richtung des ersten und zweiten Endes erhöht und wobei in dem zentralen Abschnitt (12.3) auf dem zylindermantelförmigen metallischen Wandbereich (12.1) eine Verstärkungslage (12.4) befestigt ist, die einen faserverstärkten Kunststoff aufweist.

2. Speicher- und/oder Transportbehälter (100) nach Anspruch 1, bei dem der faserverstärkte Kunststoff eine Matrix in Form einer Kunstharz-, Duroplast- oder Thermoplastmatrix aufweist.

3. Speicher- und/oder Transportbehälter (100) nach Anspruch 2, bei dem in die Matrix Verstärkungsfasern eingebettet sind, die aus Basaltfasern, Borfasern, Glasfasern, Keramikfasern, Kieselsäurefasern, Kohlenstofffasern, Quarzfasern, Metallfasern, Aramidfasern, Poly(p-phenylen-2,6-benzobisoxazol)-Fasern, Polyesterfasern, Nylonfasern, Polyethylenfasern, Polymethylmethacrylatfasern und beliebigen Kombinationen der genannten Fasern ausgewählt sind.

4. Speicher- und/oder Transportbehälter (100) nach Anspruch 2 oder 3, bei dem eine Zugfestigkeit der Verstärkungslage (12.4) und/oder des faserverstärkten Kunststoffs 500 bis 1000 Newton pro Quadratmillimeter beträgt und/oder eine Dichte 1 bis 5 Kilogramm pro Kubikdezimeter beträgt.

5. Speicher- und/oder Transportbehälter (100) nach einem der vorstehenden Ansprüche, bei dem die Verstärkungslage (12.4) zumindest teilweise auf den zylindermantelförmigen metallischen Wandbereich (12.1) auflaminiert ist.

6. Speicher- und/oder Transportbehälter (100) nach einem der vorstehenden Ansprüche, bei dem ein Umfang des zylindermantelförmigen metallischen Wandbereichs (12.1) in dem zentralen Abschnitt (12.3) geringer als an den Enden des zylindermantelförmigen metallischen Wandbereichs (12.1) ist.

7. Speicher- und/oder Transportbehälter (100) nach einem der vorstehenden Ansprüche, bei dem der zylindermantelförmige metallische Wandbereich (12.1) in zumindest einem Teil des zentralen Abschnitts (12.3) mit einer Dicke von weniger als 8, 7, 6, 5 oder 4 Millimetern ausgebildet ist.

8. Speicher- und/oder Transportbehälter (100) nach einem der vorstehenden Ansprüche, bei dem die gewölbten metallischen Wandbereiche (12.2) jeweils mit Containerrahmen (13) verbunden sind.

9. Speicher- und/oder Transportbehälter (100) nach Anspruch 8, der in einem Standard-Containerformat mit einer Länge von 20 oder 40 Fuß (6,096 oder 12,192 Meter) ausgebildet ist.

10. Speicher- und/oder Transportbehälter (100) nach einem der vorstehenden Ansprüche, bei dem die gewölbten metallischen Wandbereiche (12.2) in Form unmodifizierter oder modifizierter Kugel- oder Ellipsoidkalotten bereitgestellt sind.

11. Speicher- und/oder Transportbehälter (100) nach einem der vorstehenden Ansprüche, bei dem die gewölbten metallischen Wandbereiche (12.2) einstückig mit dem zylindermantelförmigen metallischen Wandbereich (12.1) ausgebildet oder mit diesem stoffschlüssig verbunden ist.

12. Speicher- und/oder Transportbehälter (100) nach einem der vorstehenden Ansprüche, bei dem die Doppelwand (10) zur Evakuierung oder Befüllung mit einem Isolier- oder Kühlfluid eingerichtet oder mit einem Isoliermaterial befüllt ist.

13. Speicher- und/oder Transportbehälter (100) nach einem der vorstehenden Ansprüche, der zur Speicherung und/oder zum Transport von Flüssigwasserstoff oder Flüssighelium als dem kryogen verflüssigten Gas (1) ausgebildet ist.

14. Speicher- und/oder Transportbehälter (100) nach einem der vorstehenden Ansprüche, der zur Speicherung und/oder zum Transport von 20 bis 41 Kubikmetern des kryogen verflüssigten Gases (1) eingerichtet ist.

15. Verfahren zur Speicherung und/oder zum Transport eines kryogen verflüssigten Gases (1), **dadurch gekennzeichnet, dass** bei dem ein Speicher- und/oder Transportbehälter (100) nach einem der vorstehenden Ansprüche verwendet wird.

## Claims

1. Storage and/or transport container (100) for a cryogenic liquefied gas (1), comprising a double wall (10) which is formed by an outer container (12) and an inner container (11), wherein the outer container (12) surrounds the inner container, and wherein the outer container (12) has a cylindrical jacket-like metal wall region (12.1) which transitions into domed metal wall regions (12.2) at opposite ends, **characterized in that** a wall thickness of the cylindrical jacket-like metal wall region (12.1) increases from a central portion (12.3), which is located centrally between the first and second end, in the direction of the first and second end, and wherein, in the central portion (12.3), a reinforcement layer (12.4) which comprises a fiber-reinforced plastics material is fastened to the cylindrical jacket-like metal wall region (12.1).

2. Storage and/or transport container (100) according to claim 1, in which the fiber-reinforced plastics material comprises a matrix in the form of a synthetic-resin matrix, thermoset matrix or thermoplastic matrix.

3. Storage and/or transport container (100) according to claim 2, in which reinforcing fibers are embedded in the matrix, which are selected from basalt fibers, boron fibers, glass fibers, ceramic fibers, silica fibers, carbon fibers, quartz fibers, metal fibers, aramid fibers, poly(p-phenylene-2,6-benzobisoxazole) fibers, polyester fibers, nylon fibers, polyethylene fibers, polymethyl methacrylate fibers, and any combinations of said fibers.

4. Storage and/or transport container (100) according to claim 2 or claim 3, in which a tensile strength of the reinforcement layer (12.4) and/or of the fiber-reinforced plastics material is 500 to 1000 newtons per square millimeter, and/or a density is 1 to 5 kilograms per cubic decimeter.

5. Storage and/or transport container (100) according to any of the preceding claims, in which the reinforcement layer (12.4) is at least partially laminated onto the cylindrical jacket-like metal wall region (12.1).

6. Storage and/or transport container (100) according to any of the preceding claims, in which a circumference of the cylindrical jacket-like metal wall region (12.1) is smaller in the central portion (12.3) than at the ends of the cylindrical jacket-like metal wall region (12.1).

7. Storage and/or transport container (100) according to any of the preceding claims, in which the cylindrical jacket-like metal wall region (12.1) is designed to have a thickness of less than 8, 7, 6, 5 or 4 millimeters in at least part of the central portion (12.3).

8. Storage and/or transport container (100) according to any of the preceding claims, in which the domed metal wall regions (12.2) are each connected to container frames (13).

9. Storage and/or transport container (100) according to claim 8, which is designed in a standard container format having a length of 20 or 40 feet (6.096 or 12.192 meters).

10. Storage and/or transport container (100) according to any of the preceding claims, in which the domed metal wall regions (12.2) are provided in the form of unmodified or modified spherical caps or ellipsoidal caps.

11. Storage and/or transport container (100) according to any of the preceding claims, in which the domed metal wall regions (12.2) are formed in one piece with the cylindrical jacket-like metal wall region (12.1) or are integrally connected thereto.

12. Storage and/or transport container (100) according to any of the preceding claims, in which the double wall (10) is designed to be evacuated or filled with an insulating or cooling fluid or is filled with an insulating material.

13. Storage and/or transport container (100) according to any of the preceding claims, which is designed to store and/or transport liquid hydrogen or liquid helium as the cryogenic liquefied gas (1).

14. Storage and/or transport container (100) according to any of the preceding claims, which is designed to store and/or transport 20 to 41 cubic meters of the cryogenic liquefied gas (1).

15. Method for storing and/or transporting a cryogenic liquefied gas (1), **characterized in that** a storage and/or transport container (100) according to any of the preceding claims is used.

## Revendications

1. Réservoir de stockage et/ou de transport (100) pour un gaz liquéfié par voie cryogénique (1), qui présente une double paroi (10) qui est formée par un réservoir extérieur (12) et un réservoir intérieur (11), dans lequel le réservoir extérieur (12) entoure le réservoir intérieur, et dans lequel le réservoir extérieur (12) présente une zone de paroi métallique en forme d'enveloppe cylindrique (12.1) qui se transforme, aux extrémités opposées l'une à l'autre, en zones de paroi métallique bombées (12.2), **caractérisé en ce qu'**une épaisseur de paroi de la zone de paroi métallique en forme d'enveloppe cylindrique (12.1) augmente en direction de la première et de la seconde extrémité en partant d'une section centrale (12.3) qui se trouve au milieu entre la première et la seconde extrémité, et dans lequel une couche de renforcement (12.4) qui présente une matière plastique renforcée par des fibres est fixée dans la section centrale (12.3) sur la zone de paroi métallique en forme d'enveloppe cylindrique (12.1).

2. Réservoir de stockage et/ou de transport (100) selon la revendication 1, dans lequel la matière plastique renforcée par des fibres présente une matrice sous la forme d'une matrice de résine synthétique, de résine thermodurcissable ou de thermoplastique.

3. Réservoir de stockage et/ou de transport (100) selon la revendication 2, dans lequel des fibres de renforcement, choisies parmi des fibres de basalte, des fibres de bore, des fibres de verre, des fibres de céramique, des fibres d'acide silicique, des fibres de carbone, des fibres de quartz, des fibres métalliques, des fibres d'aramide, des fibres de poly(p-phénylène-2,6-benzobisoxazole), des fibres de polyester, des fibres de nylon, des fibres de polyéthylène, des fibres de polyméthacrylate de méthyle et une quelconque combinaison desdites fibres, sont incorporées dans la matrice.

4. Réservoir de stockage et/ou de transport (100) selon la revendication 2 ou 3, dans lequel une résistance à la traction de la couche de renforcement (12.4) et/ou de la matière plastique renforcée par des fibres est de 500 à 1 000 Newton par millimètre carré et/ou une densité est de 1 à 5 kilogrammes par décimètre cube.

5. Réservoir de stockage et/ou de transport (100) selon l'une des revendications précédentes, dans lequel la couche de renforcement (12.4) est laminée au moins partiellement sur la zone de paroi métallique en forme d'enveloppe cylindrique (12.1).

6. Réservoir de stockage et/ou de transport (100) selon l'une des revendications précédentes, dans lequel une circonférence de la zone de paroi métallique en forme d'enveloppe cylindrique (12.1) est plus petite dans la section centrale (12.3) qu'aux extrémités de la zone de paroi métallique en forme d'enveloppe cylindrique (12.1).

7. Réservoir de stockage et/ou de transport (100) selon l'une des revendications précédentes, dans lequel la zone de paroi métallique en forme d'enveloppe cylindrique (12.1) est formée dans au moins une partie de la section centrale (12.3) avec une épaisseur inférieure à 8, 7, 6, 5 ou 4 millimètres.

8. Réservoir de stockage et/ou de transport (100) selon l'une des revendications précédentes, dans lequel les zones de paroi métalliques bombées (12.2) sont respectivement reliées à des cadres de conteneur (13).

9. Réservoir de stockage et/ou de transport (100) selon la revendication 8, qui est formé dans un format de conteneur standard avec une longueur de 20 ou 40 pieds (6,096 ou 12,192 mètres)

10. Réservoir de stockage et/ou de transport (100) selon l'une des revendications précédentes, dans lequel les zones de paroi métallique bombées (12.2) sont fournies sous la forme de calottes sphériques ou ellipsoïdales non modifiées ou modifiées.

11. Réservoir de stockage et/ou de transport (100) selon l'une des revendications précédentes, dans lequel les zones de paroi métalliques bombées (12.2) sont formées d'une seule pièce avec la zone de paroi métallique en forme d'enveloppe cylindrique (12.1) ou sont reliées à celle-ci par liaison de matière.

12. Réservoir de stockage et/ou de transport (100) selon l'une des revendications précédentes, dans lequel la double paroi (10) est conçue pour être mise sous vide ou remplie d'un fluide isolant ou de refroidissement, ou est remplie d'un matériau isolant.

13. Réservoir de stockage et/ou de transport (100) selon l'une des revendications précédentes, qui est réalisé pour stocker et/ou transporter de l'hydrogène liquide ou de l'hélium liquide en tant que gaz liquéfié par voie cryogénique (1).

14. Réservoir de stockage et/ou de transport (100) selon l'une des revendications précédentes, conçu pour stocker et/ou transporter de 20 à 41 mètres cubes du gaz liquéfié par voie cryogénique (1).

15. Procédé de stockage et/ou de transport d'un gaz liquéfié par voie cryogénique (1), **caractérisé en ce qu'il** utilise un réservoir de stockage et/ou de transport (100) selon l'une des revendications précédentes.
